# FASCICULE DE BREVET EUROPEEN

(11) **EP 2 041 455 B1**
(45) Date de publication et mention de la délivrance du brevet: **07.09.2011**
(21) Numéro de dépôt: 07823530.6
(22) Date de dépôt: 02.07.2007
(51) Int. Cl.: F16H 61/40, B60K 6/12, B60W 30/18

(54) **CIRCUIT HYDRAULIQUE DE RECUPERATION D'ENERGIE**
HYDRAULISCHES ENERGIERÜCKGEWINNUNGSSYSTEM
HYDRAULIC ENERGY RECOVERY SYSTEM

(30) Priorité: 03.07.2006 FR 0652763; 07.08.2006 FR 0653305
(43) Date de publication de la demande: 01.04.2009
(73) Titulaire: Poclain Hydraulics Industrie, 60411 Verberie (FR)
(72) Inventeur: HEREN, Jean, 60280 Margny Les Compiegne (FR); LEMAIRE, Gilles, 60280 Margny Les Compiègnes (FR)
(74) Mandataire: Intès, Didier Gérard André
(86) Numéro de dépôt international: PCT/FR2007/051574
(87) Numéro de publication internationale: WO 2008/003896

(56) Documents cités:
- EP-A- 1 433 648
- WO-A-98/47732
- US-A1- 4 204 405
- US-A1- 4 754 603

## Description

La présente invention concerne un circuit hydraulique de récupération d'énergie, comprenant au moins un moteur hydraulique, deux conduits principaux pour l'alimentation ou l'échappement dudit au moins un moteur, une source de fluide à basse pression et un accumulateur haute pression formant source de fluide à haute pression, le circuit étant apte à fonctionner selon un mode de récupération d'énergie dans lequel le conduit principal d'alimentation est relié à la source de fluide à basse pression et le conduit principal d'échappement est relié à l'accumulateur haute pression, et selon un mode de restitution d'énergie dans lequel le conduit principal d'alimentation est relié à l'accumulateur haute pression et le conduit principal d'échappement est relié à la source de fluide à basse pression. WO 98/47732 divulgue les caractéristiques du préambule de la revendication 1. En général les limiteurs de pression sont réglables, voir US 4204405.

On connaît de tels circuits équipant des véhicules pour limiter leur consommation d'énergie. Il s'agit de véhicules dit « hybrides », comportant un moteur de propulsion classique (par exemple de type thermique) et un circuit du type précité, dont le ou les moteurs hydrauliques peuvent être mécaniquement liés au dispositif de propulsion, par exemple en étant liés à la sortie de ce dispositif, ou bien à une roue du véhicule. En régime de croisière, le véhicule est normalement entraîné par son moteur de propulsion classique. La récupération de l'énergie intervient dans une phase de freinage, pendant laquelle le moteur hydraulique est entraîné par la propulsion du véhicule en cours de freinage, pour fonctionner comme une pompe et alimenter l'accumulateur haute pression en fluide. La restitution d'énergie intervient en particulier lors d'une phase d'accélération du véhicule, pendant laquelle le moteur hydraulique est à nouveau activé et est alimenté par le fluide à haute pression provenant de l'accumulateur, pour fournir un couple moteur d'assistance à la propulsion du véhicule.

On connaît l'intérêt de tels systèmes « hydrides » pour diminuer la consommation en carburant.

On utilise classiquement, comme source de fluide à basse pression, un accumulateur basse pression, dont la forme et les dimensions peuvent poser des problèmes d'encombrement.

On peut choisir comme source de fluide à basse pression, une pompe de gavage dont l'alimentation est reliée à un réservoir à la pression atmosphérique de forme plus libre donc plus facile à intégrer dans le véhicule. Cette pompe de gavage est dimensionnée pour assurer un gavage optimum des cylindres du ou des moteurs hydrauliques lors de la phase de récupération d'énergie, alors que le débit est maximum. De telles pompes sont classiquement à tarage fixe, c'est-à-dire qu'elles sont associées à un limiteur de pression à tarage fixe, limitant la pression délivrée à une valeur prédéterminée unique.

Le couple de freinage hydrostatique réalisé par le ou les moteurs hydrauliques en phase de récupération d'énergie et le couple moteur délivré par ce ou ces moteurs en phase de restitution d'énergie est égal au produit de la cylindrée du moteur et de la différence entre la haute pression de l'accumulateur haute pression et la basse pression de gavage de la pompe. Cette haute pression est imposée par l'accumulateur, en fonction de son niveau de charge, tandis que, comme indiqué précédemment, la basse pression est imposée par le tarage fixe de la pompe. Si, par ailleurs, la cylindrée du moteur est fixe, il n'est pas possible d'ajuster le couple de freinage hydrostatique ou le couple moteur au besoin réel.

Pour éviter un freinage trop brutal en phase de récupération d'énergie ou une assistance trop brutale en phase de restitution d'énergie, on a tendance à sous-dimensionner le ou les moteurs hydrauliques, dont le couple de sortie est donc relativement limité.

Il en résulte que les possibilités de stockage du fluide en phase de récupération d'énergie et les possibilités d'assistance en phase de restitution d'énergie sont relativement limitées, ce qui nuit évidemment au rendement du circuit et donc à sa performance globale. En d'autres termes, la diminution de la consommation de carburant n'est pas optimisée.

Bien évidemment, dans le cas où c'est un accumulateur basse pression qui est utilisé comme source de fluide à basse pression, les difficultés évoquées ci-dessus sont également rencontrées, puisque la basse pression est alors imposée par l'accumulateur basse pression, sans possibilité de réglage.

La présente invention vise à remédier à ces inconvénients ou, tout au moins, à les atténuer significativement.

Ce but est atteint grâce au fait que la source de fluide à basse pression comprend une pompe de gavage haut débit apte à délivrer, à partir d'un réservoir sans surpression, un débit de fluide suffisant pour assurer l'alimentation en fluide dudit au moins un moteur hydraulique alors que celui-ci est à vitesse maximale dans le mode de récupération d'énergie, ainsi qu'un limiteur de pression réglable apte à être commandé pour faire varier la pression du fluide à la source de fluide à basse pression.

On comprend qu'en faisant varier la basse pression du fluide de la source de fluide à basse pression grâce au limiteur de pression réglable, on permet une variation du couple du moteur, même si la cylindrée de ce dernier est fixe, étant rappelé que ce couple est le produit de cette cylindrée et de la différence entre la haute et la basse pression. Le caractère réglable du limiteur de pression signifie qu'il s'agit d'une valve progressive, dont la position peut être finement ajustée en fonction du besoin en pression. Ainsi le limiteur de pression réglable permet, quel que soit le type de moteur hydraulique utilisé, de régler la basse pression à un niveau nécessaire pour ajuster le couple moteur et éviter la cavitation, en phase de récupération d'énergie comme en phase de restitution d'énergie.

Par exemple, lors de la phase de récupération d'énergie, on peut choisir de régler la pression de sortie de la source de fluide à basse pression à un niveau nécessaire pour alimenter le ou les moteurs hydraulique (dont la vitesse est imposée par la propulsion classique du véhicule) sans cavitation, permettant ainsi à ce ou à ces moteurs de pomper une quantité maximum de fluide pour optimiser la recharge de l'accumulateur haute pression. Lors de la phase de restitution d'énergie, on peut choisir de régler la basse pression à un niveau minimum pour obtenir un couple d'assistance élevé.

Avantageusement, le circuit comprend des moyens pour activer ou désactiver la pompe de gavage haut débit, de préférence associés à un clapet anti-retour empêchant le retour du fluide vers ladite pompe.

Ceci permet de ne consommer l'énergie nécessaire à l'entraînement de cette pompe que lorsque cette dernière est utile pour la récupération de l'énergie, tandis que cette pompe peut être désactivée dans les autres cas.

Avantageusement, le circuit comprend des moyens pour détecter au moins un paramètre révélateur de l'état du circuit et pour commander le limiteur de pression réglable en fonction dudit au moins un paramètre. Par exemple, ce paramètre révélateur comprend le niveau de charge de l'accumulateur haute pression.

Ces dispositions permettent d'affiner le réglage de la basse pression pour ajuster le couple de freinage ou le couple moteur d'assistance au besoin réel, révélé par le paramètre précité.

Par exemple, en phase de récupération d'énergie, la haute pression du circuit, qui est la pression nécessaire au remplissage de l'accumulateur haute pression, augmente avec le niveau de charge de ce dernier. Sans réglage de la basse pression, le couple de freinage augmenterait donc avec le niveau de charge de l'accumulateur. Ceci n'est pas toujours souhaitable, en particulier parce que cette augmentation risque de se produire à la fin d'une phase de freinage du véhicule, alors que la vitesse de ce véhicule a déjà très sensiblement diminué, de sorte qu'un couple de freinage constant serait suffisant.

Grâce aux dispositions précitées, on peut au contraire augmenter la pression de sortie de la source de fluide à basse pression en même temps que la pression de l'accumulateur haute pression augmente, pour stabiliser le couple de freinage.

Avantageusement, le circuit comprend des moyens pour commander le limiteur de pression réglable en fonction d'une consigne de fonctionnement dudit au moins un moteur hydraulique. Par exemple, la consigne de fonctionnement se rapporte au couple de sortie du moteur.

Ceci permet en particulier de faire fonctionner le ou les moteurs en mode de récupération d'énergie pour recharger l'accumulateur haute pression, alors que la demande en couple de freinage est faible et, symétriquement, de régler le couple moteur d'assistance pour éviter les à-coups dans la propulsion et faire fonctionner le ou les moteurs en mode de restitution d'énergie, même lorsque la demande en couple n'est pas très importante. On augmente donc les occasions d'utiliser l'assistance hydraulique, réduisant ainsi davantage la consommation de carburant de la propulsion classique.

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
- la figure 1A montre un circuit hydraulique conforme à l'invention, selon un premier mode de réalisation, dans une configuration d'attente ;
- la figure 1B montre le même circuit, dans une phase intermédiaire entre la configuration d'attente et un mode de récupération ou de restitution d'énergie ;
- la figure 1C montre ce circuit en mode de récupération d'énergie ;
- la figure 1D montre ce circuit à l'issue d'une phase de récupération d'énergie, mais avant une phase de restitution d'énergie ;
- la figure 1E montre ce circuit lors de la phase de restitution d'énergie ;
- la figure 2A montre un circuit selon un deuxième mode de réalisation, dans une configuration d'attente ;
- les figures 2B, 2C et 2D montrent ce circuit dans des situations correspondant respectivement à celles des figures 1B, 1C et 1E ;
- les figures 3A, 3B et 3C illustrent les évolutions de pression, de couple et de vitesse lors d'une restitution d'énergie ; et
- les figures 4A, 4B et 4C sont analogues aux figures 3A, 3B et 3C, pour une récupération d'énergie.

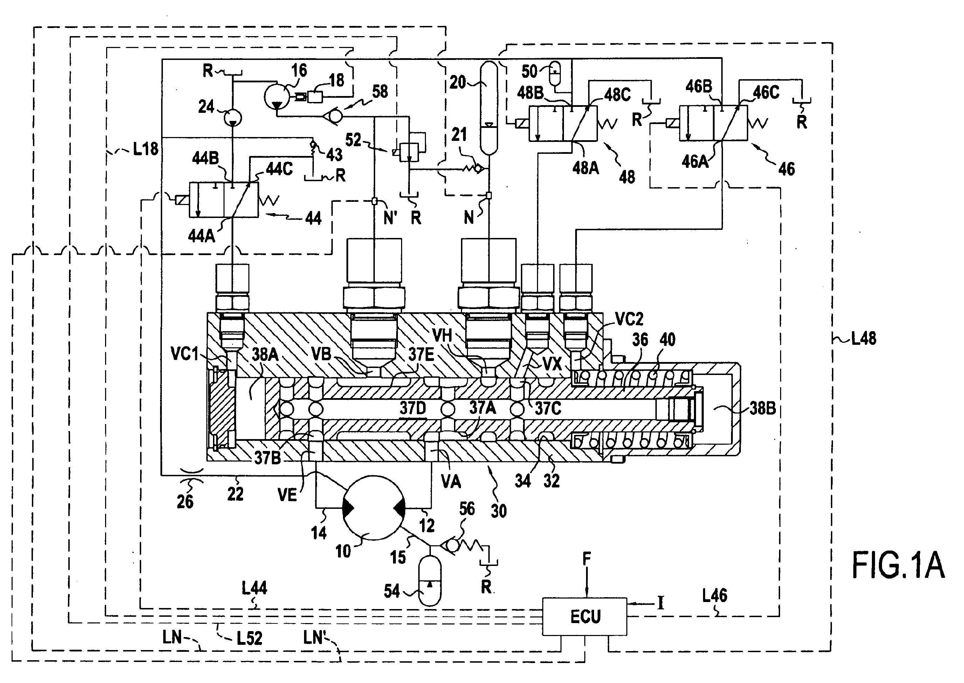

Le circuit représenté sur les figures 1A à 1E comprend un moteur hydraulique 10 avec deux conduits principaux, respectivement 12 et 14 pour assurer son alimentation en fluide ou son échappement. Il comprend également une source de fluide à basse pression 16 formée par une pompe de gavage haut débit, qui pompe le fluide dans un réservoir R sans surpression (à la pression atmosphérique). Cette pompe est choisie pour pouvoir délivrer un débit de fluide suffisant pour assurer l'alimentation en fluide du moteur hydraulique alors que celui-ci est à vitesse maximale, dans la configuration de récupération d'énergie. Si plusieurs moteurs sont présents dans le circuit, on utilise avantageusement une même pompe de gavage haut débit, dimensionnée pour délivrer le débit de fluide suffisant pour assurer l'alimentation sans cavitation des différents moteurs lorsqu'ils sont en vitesse maximale dans cette configuration.

La pompe 16 est entraînée par un moteur qui peut être le moteur de la propulsion classique du véhicule. Des moyens sont prévus pour activer ou désactiver la pompe 16. En l'espèce, elle est équipée d'un embrayage électromagnétique 18.

Le circuit comporte également une source de fluide à haute pression, formée par un accumulateur 20.

Le moteur 10 est du type embrayable et débrayable. Il s'agit par exemple d'un moteur hydraulique à pistons radiaux et à cylindrée fixe. Pour permettre le passage en configuration débrayée, c'est-à-dire le rappel des pistons du moteur vers le fond de leurs cylindres, l'espace intérieur du carter du moteur est mis en pression alors que les conduits principaux du moteur sont reliés à une enceinte sans surpression (réservoir) ou à une pression sensiblement inférieure à la pression du carter du moteur. A cet effet, une conduite 22 raccordée à une source de pression débouche dans l'espace intérieur du carter. En l'espèce, la source de pression utilisée est une pompe 24 qui, comme on le verra dans la suite, est également la source de fluide d'embrayage, à laquelle l'espace intérieur du carter du moteur est relié par l'intermédiaire d'une restriction 26 disposée sur la conduite 22.

Le circuit comprend une valve hydraulique 30 qui comprend un corps de valve 32 présentant un alésage interne 34 à l'intérieur duquel un tiroir 36 est monté coulissant.

Le corps de valve 32 a une voie d'alimentation VA reliée au conduit principal d'alimentation 12, une voie d'échappement VE reliée au conduit principal d'échappement 14, une voie de liaison basse pression VB reliée à la source de fluide à basse pression 16, une voie de liaison haute pression VH reliée à l'accumulateur haute pression 20 et une voie auxiliaire VX reliée à une conduite auxiliaire. La valve hydraulique 30 présente encore une première chambre de commande 38A reliée à une première voie de commande VC1 et une deuxième chambre de commande 38B, reliée à une deuxième voie de commande VC2.

Sur la figure 1A, le tiroir 36 est représenté dans sa position neutre, dans laquelle il est rappelé en permanence par un ressort 40, de sorte que le tiroir occupe sa position neutre quand la pression de fluide dans les chambres de commande 38A et 38B est égale ou sensiblement égale.

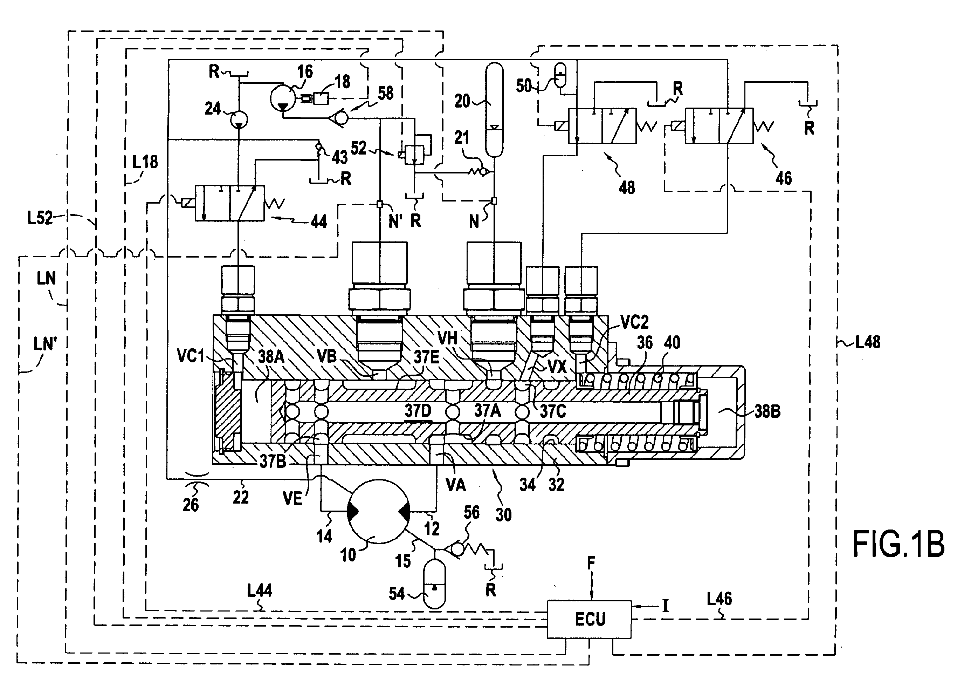

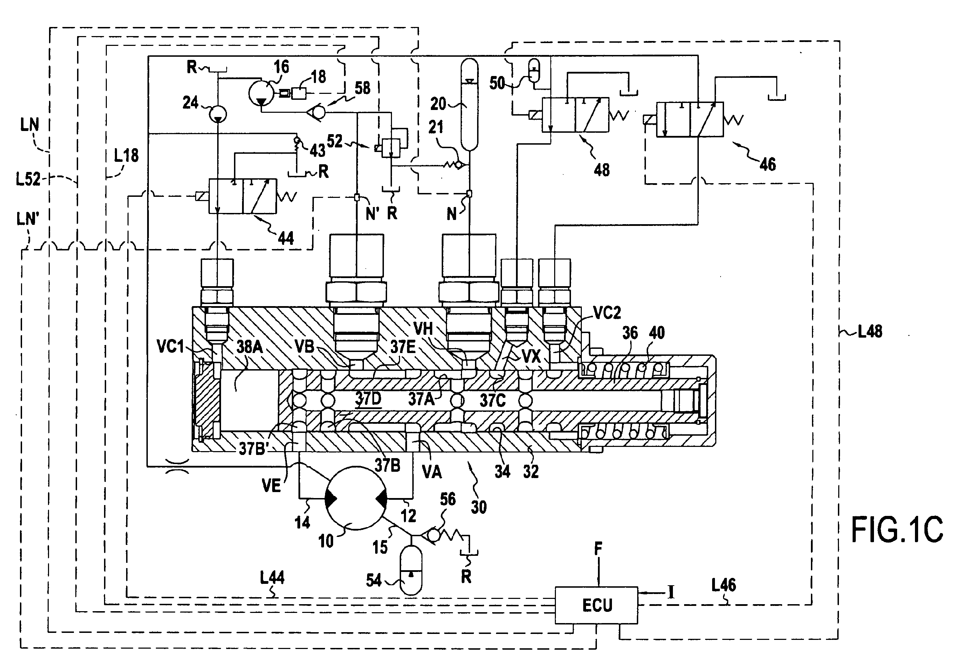

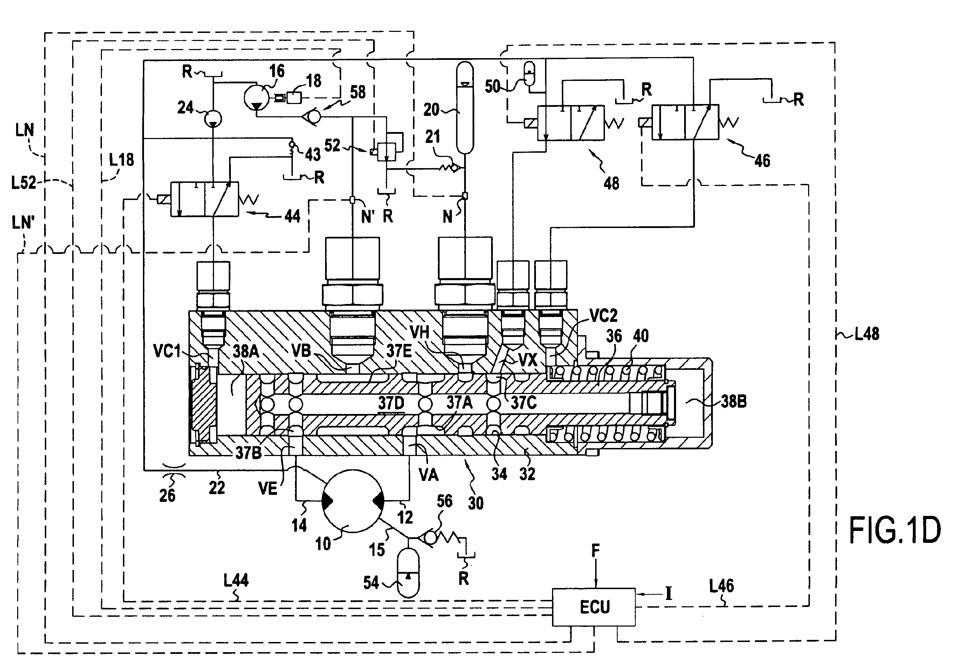

Ainsi, dans la position neutre du tiroir visible sur les figures 1A, 1B et 1D, ce tiroir est en position centrale dans le corps de valve 32. Dans la configuration de récupération d'énergie de la figure 1C, le tiroir a été déplacé dans une première position extrême (en l'espèce, vers la droite) par une augmentation de la pression dans la chambre de commande 38A dont le volume a augmenté.

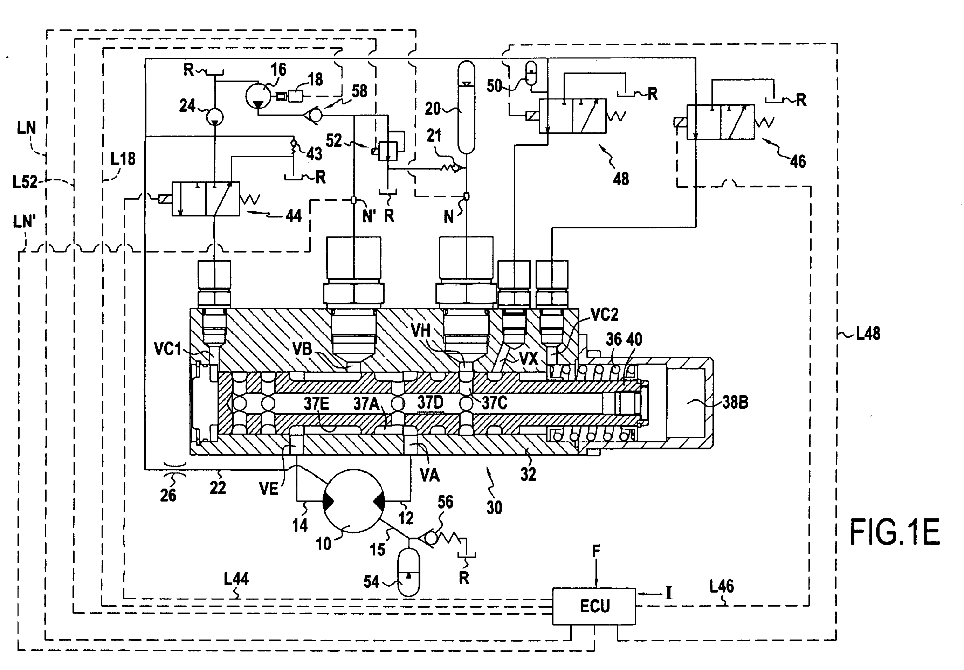

A l'inverse, dans la configuration de restitution d'énergie représentée sur la figure 1E, le tiroir a été déplacé dans son autre positon extrême (en l'espèce vers la gauche) par alimentation en fluide de la chambre de commande 38B, dont le volume a augmenté.

Le déplacement du tiroir et l'embrayage/débrayage du moteur hydraulique sont commandés par des moyens d'électrovalve.

En l'espèce, selon le premier mode de réalisation de l'invention, ces moyens comprennent une première électrovalve de pilotage 44 dont une première voie 44A est raccordée à la première voie de commande VC1, une deuxième voie 44B est raccordée à la pompe 24, et une troisième voie 44C est raccordée au réservoir R. Dans sa position de repos représentée sur la figure 1A, les voies 44A et 44C sont reliées, de sorte que la première chambre de commande 38A est raccordée au réservoir R, tandis que la voie 44B est isolée.

A réception d'un premier signal de commande transmis dans une ligne L44 par une unité de commande électronique ECU, l'électrovalve 44 passe dans sa position activée, dans laquelle les voies 44B et 44A sont reliées tandis que la voie 44C est isolée, de sorte que la chambre de commande 38A est alimentée par le fluide sous pression provenant de la pompe 24. Ainsi, le tiroir passe dans sa première position extrême représentée sur la figure 1C.

Les moyens d'électrovalve comprennent encore une deuxième électrovalve de pilotage 46 qui présente une première voie 46A reliée à la deuxième voie de commande VC2, une deuxième voie 46B reliée à la pompe 24 et une troisième voie 46C reliée au réservoir R.

Dans la position de repos de l'électrovalve 46 représentée sur la figure 1A, les voies 46A et 46C sont reliées, de sorte que la deuxième chambre de commande 38B est reliée au réservoir R. A réception d'un deuxième signal de commande émis dans une ligne de commande L46 par l'unité ECU, la valve 46 adopte sa position activée dans laquelle les voies 46A et 46B sont reliées, de sorte que la chambre 38B peut être alimentée en fluide par la pompe 24. Ainsi, le tiroir passe dans sa deuxième position extrême représentée sur la figure 1E

Le circuit comprend encore une électrovalve de débrayage 48 qui présente une première voie 48A qui est reliée à la voie auxiliaire VX de la valve 30, une deuxième voie 48B qui est reliée à la pompe 24 et une troisième voie 48C qui est reliée au réservoir R. Dans la position de débrayage de la valve 48 qui, en l'espèce est sa position de repos, les voies 48A et 48C sont reliées en étant isolées de la voie 48B, de sorte que la voie auxiliaire VX de la valve 38 est reliée au réservoir. Dans la position d'embrayage de l'électrovalve 48 qui, en l'espèce, est sa position activée dans laquelle elle est commandée par un signal de commande émis par l'unité ECU dans la ligne de commande L48, ses voies 48A et 48B sont reliées, de sorte que la voie auxiliaire VX de la valve 30 est reliée à la pompe 24.

Avantageusement, pour réduire le temps d'embrayage du moteur, un accumulateur 50 de faible capacité (donc peu encombrant) est disposé en dérivation sur le raccord entre la pompe 24 et les voies 44B, 46B et 48B de ces valves.

On comprend que, dans le circuit représenté, la pompe 24 sert à la fois à la commande du déplacement du tiroir 36 et à celle de l'embrayage/débrayage du moteur 10.

Les éventuels excès de pression dans l'accumulateur 20 peuvent être délestés dans le réservoir R, auquel cet accumulateur est relié par un limiteur de pression 21.

Comme indiqué précédemment, la pompe haut débit 16 est équipée d'un embrayage électromagnétique 18 qui permet de n'activer cette pompe que lorsque cela est nécessaire, en particulier en phase de récupération d'énergie. L'embrayage 18 est commandé par un signal de commande émis par l'unité ECU dans la ligne de commande L18. La pompe 16 ne fonctionne donc pas inutilement, ce qui permet d'économiser l'énergie.

Le circuit comprend un limiteur de pression réglable 52, pour faire varier la pression dans la voie de liaison basse pression VB. En l'espèce, ce limiteur de pression 52 est disposé sur une liaison entre l'orifice de refoulement de la pompe 16 et le réservoir R. Ce limiteur de pression réglable est en l'espèce à commande électrique, le limiteur 52 étant de type électrovalve et étant relié à l'unité de commande ECU par une ligne de commande L52.

Dans la phase de récupération d'énergie, la voie de liaison basse pression VB sert à l'alimentation du moteur 10 et il est alors souhaitable de régler la pression en sortie de la pompe 16 à un niveau nécessaire pour alimenter le ou les moteurs hydrauliques sans cavitation. En revanche, dans la phase de restitution d'énergie, la voie de liaison VB, qui est reliée à l'échappement du moteur, doit évacuer le fluide vers le réservoir R et il est alors préférable que le limiteur de pression 52 soit réglé à un niveau de pression minimum, voire de pression nulle. De préférence, dans cette phase de restitution, la pompe 16 est désactivée et un clapet anti-retour 58 empêche le fluide refoulé par le moteur 10 de retourner vers la pompe 16 pour que le réglage de la basse pression soit assuré par le limiteur 58.

L'espace intérieur du carter du moteur 10 est relié à un accumulateur secondaire 54 de faible capacité qui permet de conserver en attente une pression de fluide suffisante pour rapidement débrayer le moteur 10 lorsque cela est nécessaire. Cette liaison est réalisée par un conduit de retour de fuites du moteur, conduit sur lequel est disposé un limiteur de pression 56, en aval du point de raccordement de l'accumulateur 54 à ce conduit 15.

On voit que, de manière classique, un limiteur de pression 43 est relié à la sortie de la pompe 24. Il permet de définir la pression d'embrayage et de pilotage.

Le fonctionnement de ce circuit est le suivant.

Dans une configuration d'attente du circuit, représentée sur la figure 1A, le tiroir 36 de la valve 30 est dans sa position neutre : aucun signal de commande n'a été émis vers les valves 44 et 46 qui sont dans leurs positions de repos respectives, de sorte que les chambres de commande 38A et 38B ne sont pas mises en pression et que la position neutre est obtenue par l'effet de rappel du ressort 40.

Les voies d'alimentation VA, d'échappement VE et auxiliaire VX communiquent alors entre elles, par des gorges 37A, 37B et 37C et un perçage axial 37D du tiroir. Une quatrième gorge 37E du tiroir, est isolée des précédentes, isole la voie VB des autres voies.

L'unité de commande électronique ECU est informée des conditions de marche du véhicule, en particulier d'une décélération ou d'une accélération de ce dernier, et donc d'un besoin de récupération ou de restitution d'énergie par une information I. Lorsque cette information révèle une décélération propre à permettre la récupération d'énergie, l'unité ECU émet un signal d'embrayage dans la ligne L48 et commande donc l'électrovalve 48 dans sa position activée, permettant ainsi l'alimentation en fluide de la voie auxiliaire VX. Les conduits principaux d'alimentation et d'échappement 12 et 14 du moteur sont alors mis à la même pression (de sorte que le moteur ne produit encore aucun couple significatif) mais cette pression délivrée par la pompe 24 et éventuellement l'accumulateur 50, est suffisamment supérieure à la pression régnant dans le carter du moteur pour repousser les pistons de ce moteur contre la came de ce dernier. Le moteur est alors embrayé.

La figure 1B montre la situation lors de l'embrayage du moteur. On voit que le tiroir est resté dans sa position neutre, sans modifier le raccordement entre les voies VA, VE et VX ni l'isolement de la voie VB, mais que l'électrovalve 48 est dans sa position d'embrayage.

Pour permettre la phase de récupération d'énergie consistant à alimenter l'accumulateur 20 par la rotation du moteur 10 fonctionnant en pompe, il est nécessaire que la pompe 16 soit alors activée par son embrayage 18, en particulier par un signal de commande d'embrayage émis par l'unité de commande électronique ECU dans la ligne L18.

Le moteur étant embrayé et la pompe étant activée, l'unité de commande électronique ECU émet un premier signal de commande dans la ligne L44 pour faire passer l'électrovalve 44 en position activée, de manière à commander le déplacement du tiroir dans sa première position extrême par alimentation de la chambre de commande 38A.

C'est la situation que représente la figure 1C. On voit que les voies VA et VB de la valve 30 sont alors reliées par la gorge 37E du tiroir 36 en étant isolées des autres voies. La voie VE est quant à elle reliée à la voie VH par la gorge 37B' du tiroir, son perçage central 37D et la gorge 37A. La voie VX est isolée des autres voies.

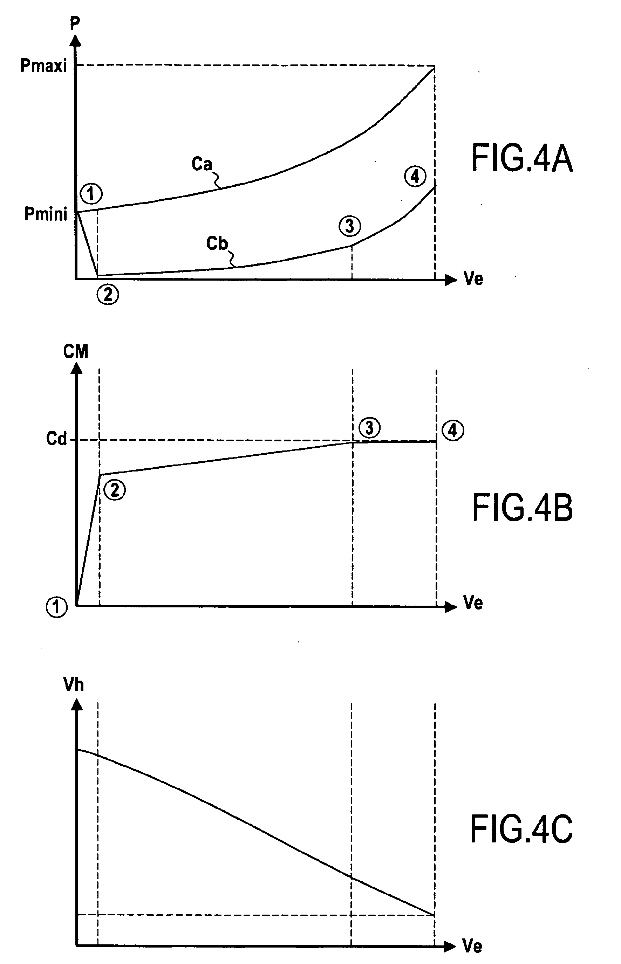

Le limiteur de pression réglable 52 est alors réglé au niveau de pression souhaité. Ce réglage sera détaillé dans la description de la figure 4A. Par exemple, ce niveau est celui obtenu par l'émission d'un signal de commande du limiteur de pression 52 dans la ligne L52, par l'unité ECU. Dans cette situation, le moteur 10 est entraîné en rotation par sa liaison mécanique avec la propulsion du véhicule, et il fonctionne comme une pompe en alimentant l'accumulateur haute pression 20 par le fluide provenant de la pompe 16. Ces besoins de rechargement sont connus par l'ECU, un capteur de pression N détectant le niveau de pression dans l'accumulateur 20, c'est-à-dire le niveau de charge de ce dernier, et cette information étant transmise à l'unité ECU par une ligne LN.

L'unité ECU peut être paramétrée pour, en phase de récupération d'énergie, assurer un écart constant entre la haute pression de l'accumulateur 20 et la basse pression délivrée par la pompe 16, de manière à obtenir un couple de freinage hydrostatique constant, ou bien pour assurer une variation de cet écart, selon une loi de variation déterminée, en fonction des besoins réels en couple de freinage hydrostatique, en particulier en réalisant un couple de freinage hydrostatique moindre vers la fin d'une phase de décélération.

La phase de récupération d'énergie peut se prolonger pendant toute la durée de la décélération ou, si un niveau de charge maximum de l'accumulateur 20 est détecté par le capteur N, cette phase peut éventuellement se terminer avant la fin de la décélération. D'autres types d'informations peuvent signaler la fin de la phase de récupération d'énergie, telles que, par exemple, une ouverture du limiteur de pression 21.

Lorsque la phase de récupération d'énergie est terminée, le signal de commande dans la ligne L44 cesse, de sorte que l'électrovalve 44 revient à sa position de repos, reliant ainsi la première chambre 38A au réservoir R. Le tiroir 36 revient alors dans sa position neutre et l'on obtient la configuration de la figure 1D, analogue à celle de la figure 1B à ceci près que le niveau de fluide dans l'accumulateur 20 a augmenté.

La configuration de la figure 1D correspond à une phase d'équilibrage, dans laquelle les conduits principaux 12 et 14 du moteur communiquent entre eux. L'électrovalve 48 peut rester dans sa position d'embrayage pendant une première période de cette phase d'équilibrage, pour maintenir le moteur embrayé, en vue de permettre un passage rapide en phase de restitution d'énergie si nécessaire ou une reprise de la phase de récupération d'énergie si le freinage reprend. Pour débrayer le moteur, il suffit que le signal d'embrayage cesse, permettant ainsi le passage de l'électrovalve 48 dans sa configuration correspondant au débrayage, dans laquelle la voie auxiliaire VX est reliée au réservoir R.

Lorsque le moteur est embrayé, pour passer à la phase de restitution d'énergie, il suffit d'émettre un deuxième signal de commande dans la ligne L46 pour passer dans la phase de restitution d'énergie. Le circuit est alors dans la configuration représentée sur la figure 1E, sur laquelle on voit que l'électrovalve 46 est dans sa position activée, permettant ainsi l'alimentation en fluide de la chambre de commande 38B, ce qui déplace le tiroir 36 dans sa deuxième position extrême.

Dans cette position du tiroir, la voie d'alimentation VA et la voie haute pression VH de la valve 30 sont reliées par la gorge 37A, le perçage 37D et la gorge 37C du tiroir 36, en étant isolées des autres voies. La voie d'échappement VE et la voie basse pression VB sont reliées par la gorge 37E du tiroir en étant isolés des autres gorges, et la voie auxiliaire VX est isolée des autres gorges. Durant cette phase de restitution d'énergie, le moteur 10, alimenté par la haute pression provenant de l'accumulateur 20 participe à la motricité du véhicule. Ceci permet en particulier de réaliser des économies d'énergie lors d'un redémarrage du moteur de propulsion après un arrêt ou lors d'une accélération à basse vitesse. La fin de la phase de restitution d'énergie est constatée par l'unité ECU, par exemple lorsque l'information I qui est transmise à cette dernière révèle que le véhicule a atteint une vitesse suffisante ou que l'accélération cesse. Elle est par ailleurs arrêtée lorsque l'accumulateur 20 ne dispose plus d'une pression de fluide suffisante, en particulier lorsque le capteur N révèle un niveau de pression bas dans cet accumulateur.

Pour délivrer un couple moteur d'assistance hydraulique maximal, le limiteur de pression 52 est réglé à pression minimale, voire nulle, Ce réglage est par exemple obtenu lorsque le signal dans la ligne L52 cesse. Il convient d'ailleurs de relever que le limiteur de pression 52 est avantageusement réglé sur le niveau de pression minimal dès le début de la phase d'équilibrage ou, au moins, dès la fin de la première période de cette phase. Pour minimiser la basse pression durant la phase d'accélération la pompe 16 peut être désactivée, par une commande appropriée ou une absence de signal de commande dans la ligne de commande L18. La basse pression est alors seulement réglée par le limiteur de pression 52.

Il convient de relever que l'information I reçue par l'unité ECU peut se rapporter aux conditions de circulation du véhicule équipé du circuit, permettant à l'unité ECU de déterminer une consigne de fonctionnement du ou des moteurs hydrauliques et de commander en conséquence le limiteur de pression 52 pour obtenir le niveau de basse pression souhaité. On peut par exemple rechercher une progressivité dans la montée en puissance du ou des moteurs hydrauliques pour éviter les effets d'à-coups lors de l'activation de l'assistance. Par exemple, cette consigne peut prendre en compte le niveau d'accélération souhaité, révélé par l'amplitude d'appui sur la pédale d'accélération ou l'amplitude de déplacement d'une manette d'accélération (« joystick »), ainsi que la vitesse du véhicule.

La consigne de fonctionnement se rapporte en particulier au couple de sortie du ou des moteurs hydrauliques, que l'on peut choisir de rendre progressif, en l'augmentant rapidement au début de la phase de restitution d'énergie, en le maintenant à un niveau stabilisé au coeur de cette phase et en le faisant diminuer vers la fin de cette phase.

Pour réaliser un asservissement du limiteur de pression 52, le niveau de la basse pression effective peut être détecté par un capteur N' et transmis à l'unité ECU par une ligne LN'.

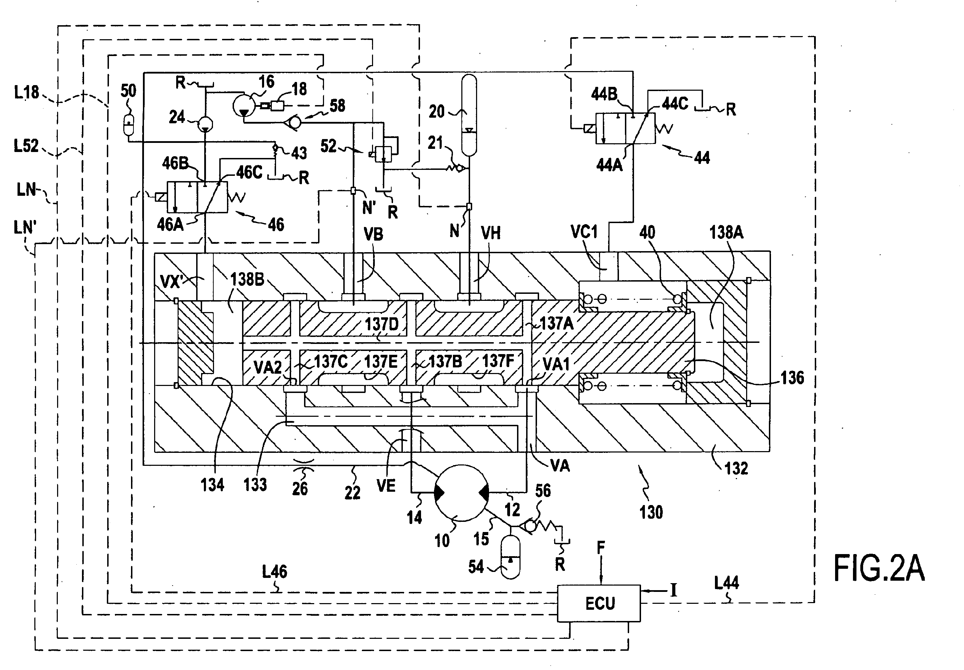

On décrit maintenant les figures 2A à 2D, sur lesquelles les éléments inchangés par rapport aux figures 1A à 1E sont désignés par les mêmes références aux dessins.

Dans la valve 130, une même voie VX' est à la fois la voie auxiliaire et la deuxième voie de commande qui alimente la chambre de commande 138B (il pourrait s'agir de celle qui alimente la chambre 138A). Grâce à un perçage 133 du corps 132 de la valve 130, sa voie VA débouche dans son alésage 134 en deux emplacements distincts, respectivement VA1 et VA2, espacés l'un de l'autre dans la direction de déplacement du tiroir. Ce dernier présente trois perçages transversaux 137A, 137B et 137C, reliés entre eux par un perçage borgne 137D qui s'ouvre dans la chambre 138B. Ce perçage s'ouvre dans la chambre (en l'espèce, 138B) à laquelle est reliée la voie auxiliaire.

Les premières voies 44A et 46A des valves 44 et 46 sont respectivement reliées aux chambres de commande 138A et 138B.

Sur la figure 2A, le tiroir est dans sa position neutre et l'on voit que les voies VA et VE communiquent entre elles et avec la voie VX', par les perçages 137A à 137D du tiroir. Dans la mesure où l'électrovalve 46 est alors dans sa position neutre, dans laquelle elle relie la voie VX' au réservoir R, les conduits principaux 12 et 14 du moteur 10 sont alors reliés au réservoir, de sorte que le moteur est débrayé.

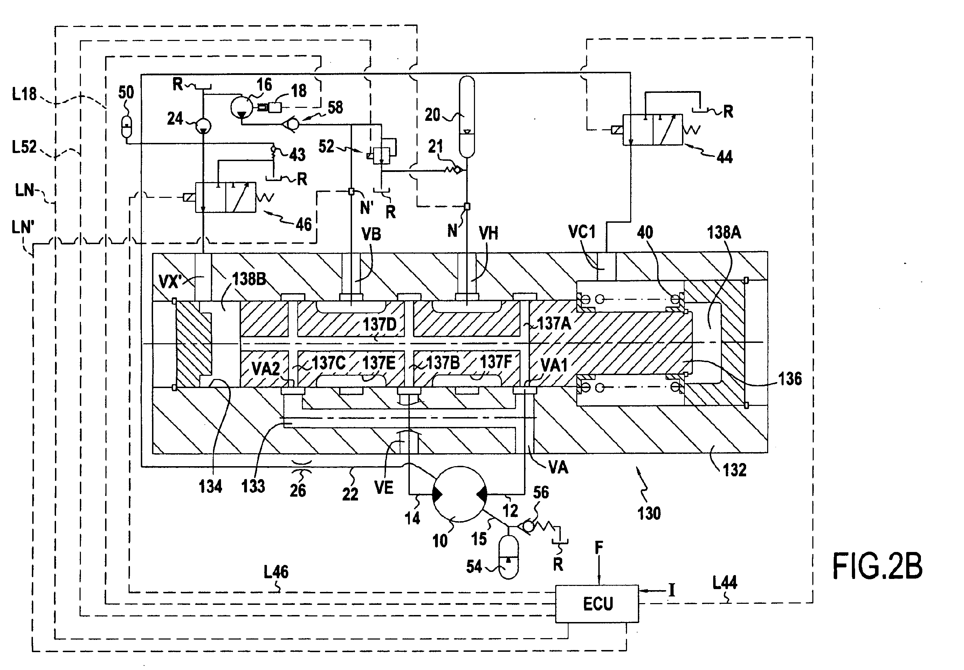

Le signal de sélection permettant d'embrayer le moteur 10 consiste dans les premiers signaux de commande, respectivement émis dans les lignes L44 et L46 par l'unité ECU pour commander les deux électrovalves 44 et 46 dans leurs positions activées. Dans cette situation, les deux chambres de commande 138A et 138B sont toutes deux reliées à la sortie de la pompe 24, de sorte que la pression dans ces deux chambres est la même et que le tiroir reste dans sa position neutre, dans laquelle il est constamment rappelé par le ressort 40. Toutefois, la voie auxiliaire VX' servant de voie de commande pour alimenter la chambre 138B et étant reliée à la sortie de la pompe 24, la pression commune dans les conduits 12 et 14 du moteur augmente, ce qui permet d'embrayer ce moteur. C'est la situation que montre la figure 2B.

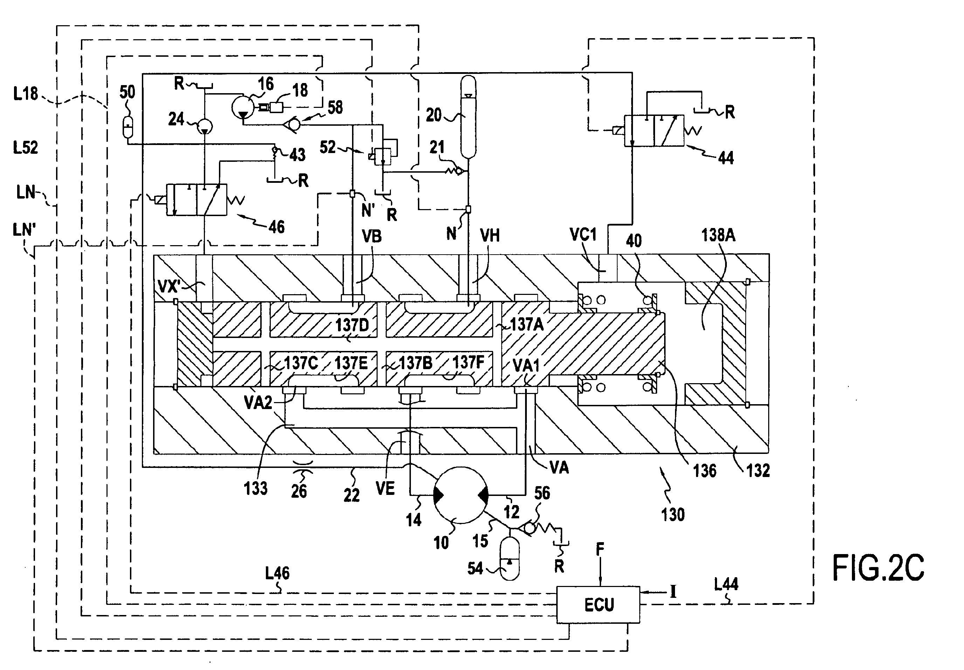

Pour passer de cette situation à la situation de récupération d'énergie, on continue d'émettre dans la ligne de commande L44 le premier signal de commande, pour continuer d'alimenter en fluide la première chambre de commande 138A, mais on cesse le signal de commande dans la ligne L46 de telle sorte que la valve 46 retourne dans sa position de repos, dans laquelle elle relie la voie VX' et donc la deuxième chambre de commande 138B au réservoir R. Dans cette situation, le tiroir est commandé dans sa première position extrême (en l'espèce, vers la gauche). Dans ce cas, la voie d'alimentation VA est reliée à la voie basse pression VB, par la gorge 137E du tiroir 136 qui est en regard avec, à la fois, l'orifice VA2 de la voie VA et la voie VB. Ces voies VA et VB sont isolées des autres voies. La voie VE est reliée à la voie VH par la gorge 137F du tiroir. La voie VX' est isolée des autres voies. C'est la situation que montre la figure 2C.

Pour garder le moteur embrayé au début de la phase d'équilibrage, l'unité ECU émet à nouveau un signal de commande dans la ligne L46, ce qui active l'électrovalve 46 et alimente donc également la chambre 138B à partir de la pompe 24, mettant ainsi cette chambre à la même pression que la chambre 138A. La situation est alors la même que celle de la figure 2B, à ceci près que le niveau de fluide dans l'accumulateur 20 a augmenté. Pour débrayer le moteur, l'unité ECU cesse d'émettre les signaux de commande dans les lignes L44 et L46, de sorte que les valves 44 et 46 reviennent à leurs positions neutres, revenant ainsi à la configuration de la figure 2A, dans laquelle les conduits d'alimentation et d'échappement 12 et 14 sont reliés au réservoir.

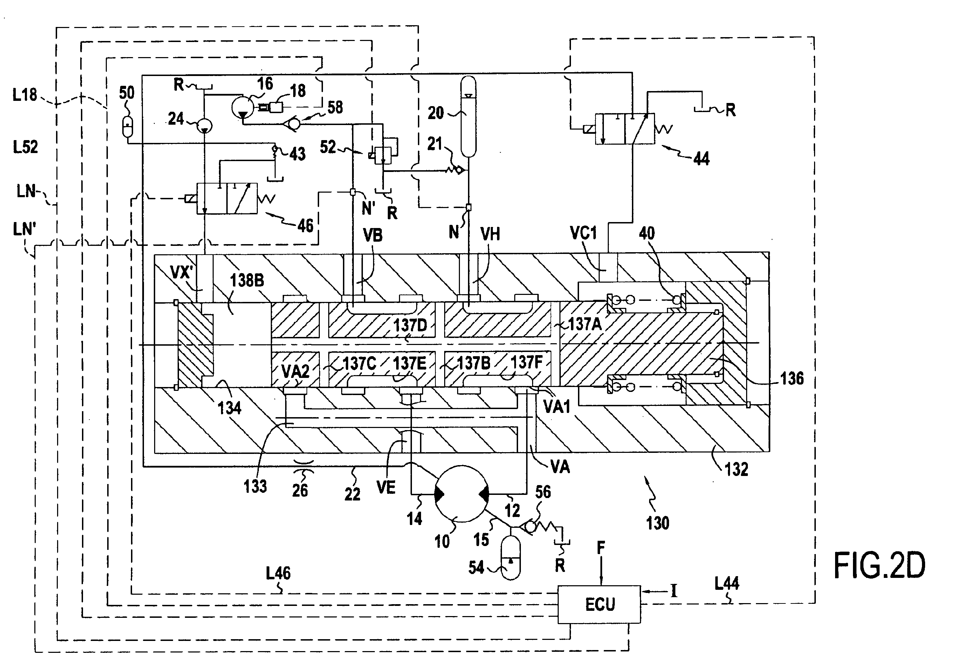

On réalise la phase de restitution d'énergie en mettant le circuit dans la configuration représentée à la figure 2D, obtenue en plaçant seulement la valve 46 dans sa position active, de sorte que seule la chambre de commande 138B est alimentée en fluide, par la voie VX', et que le tiroir est déplacé dans sa deuxième position extrême (en l'espèce, vers la droite).

Dans cette position du tiroir, la voie VA communique avec la voie VH par la gorge 137F du tiroir, qui est en regard avec, à la fois, la voie VH et le premier orifice VA1 de la voie VA. Le deuxième orifice de cette voie est quant à lui obturé par le tiroir. La voie VE communique avec la voie VB par la gorge 137E qui est en regard de ces deux voies, tandis que la voie VX' est isolée des autres voies.

Avec le circuit des figures 2A à 2D, on peut donc obtenir les mêmes configurations qu'avec celui des figures 1A à 1E en omettant l'électrovalve 48, puisque la commande de l'embrayage ou du débrayage du moteur est réalisée à partir de l'électrovalve 46.

L'unité de commande électronique ECU est apte à recevoir les informations de différents capteurs. Notamment, l'information I qui lui permet de déclencher les phases de récupération ou de restitution d'énergie peut être basée sur les mesures de différents capteurs, se rapportant en particulier à des niveaux de freinage ou d'accélération du véhicule, de couple moteur délivré par la propulsion principale, à partir desquels, sur la base de calculs et de comparaisons avec des données enregistrées, l'unité ECU détermine la nécessité de déclencher ces phases et le niveau de basse pression souhaité, pour régler en conséquence le limiteur de pression 52. Comme indiqué précédemment, le niveau de charge de l'accumulateur 20 est avantageusement également pris en compte dans cette détermination, pour éviter en particulier de déclencher une phase de récupération d'énergie lorsque la charge est maximale. L'unité ECU comporte toute zone mémoire et tout moyen de calcul ou de comparaison appropriés pour remplir ses fonctions. Les liaisons de l'unité ECU avec les différents capteurs dont elle reçoit les données et les différents organes qu'elle commande peuvent être filaires ou non.

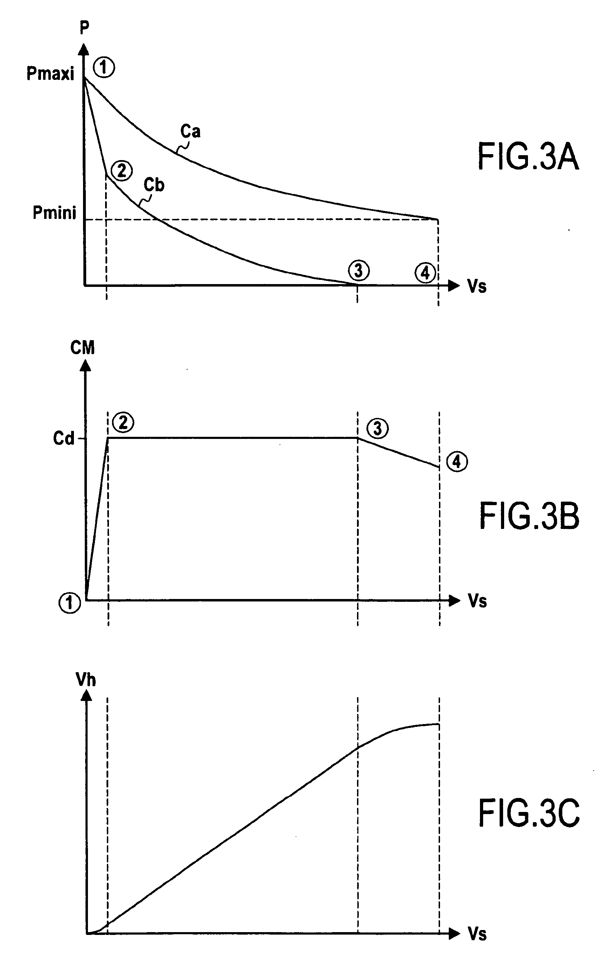

Les figures 3A, 3B et 3C illustrent, à titre d'exemple, les évolutions de pression P, de couple de sortie CM du ou des moteurs hydrauliques et de vitesse du véhicule Vh en fonction du volume cumulé Vs sorti de l'accumulateur pour alimenter le ou les moteurs hydrauliques, pendant une phase de restitution d'énergie.

Sur la figure 3A, les courbes Ca et Cb illustrent respectivement l'évolution de la haute pression dans l'accumulateur 20 (pression d'alimentation) et celle de la basse pression réglée par le limiteur de pression 52 (pression d'échappement) en fonction du volume Vs. La figure 3B illustre l'évolution du couple moteur délivré par le ou les moteurs hydraulique en fonction de ce volume et la courbe de la figure 3C illustre l'évolution de la vitesse du véhicule en fonction de ce volume. Cette vitesse est réglée par une consigne donnée par le conducteur (par l'amplitude de déplacement de la pédale ou de la manette d'accélération du véhicule). Ces courbes sont calées entre elles pour avoir les mêmes valeurs en abscisse.

Durant cette phase de restitution d'énergie, la pompe 16 est débrayée et la basse pression est réglée par la commande du limiteur de pression 52.

On constate que, lors de la phase de restitution d'énergie, la pression dans l'accumulateur (courbe Ca) diminue à mesure que l'accumulateur se décharge et que la vitesse Vh du véhicule augmente.

Au stade 1 de l'exemple considéré, à l'instant du démarrage de la phase de restitution d'énergie après une phase de récupération d'énergie menée à son terme, l'accumulateur 20 est à pleine charge et sa pression est maximum (Pmaxi), de sorte que la pression dans la conduite d'alimentation 12 (reliée à la sortie de cet accumulateur) est à cette valeur P maxi. Le limiteur 52 est alors réglé pour que la pression dans la conduite d'échappement 14 (reliée à la sortie de la source de fluide à basse pression) soit égale ou légèrement inférieure à la valeur Pmaxi. Ainsi, à ce moment, le couple moteur d'assistance hydraulique (dont il est rappelé qu'il est égal au produit de la différence des pressions entre ces deux conduites et de la cylindrée du moteur) est nul ou faible, de manière à éviter les à-coups lorsque l'assistance hydraulique commence.

La pression dans la conduite d'échappement diminue ensuite très rapidement pour augmenter rapidement le couple moteur CM, comme le montre la figure 3B, jusqu'au stade 2 auquel le couple demandé Cd, qui correspond à l'accélération souhaitée, est atteint.

On maintient alors ce niveau d'accélération jusqu'au stade 3 en faisant diminuer la pression d'échappement en parallèle avec la diminution de pression à la sortie de l'accumulateur pour obtenir, entre les phases 2 et 3, un couple moteur sensiblement constant.

Au stade 3, la pression dans la conduite d'échappement a atteint un seuil minimal auquel elle reste fixée. Toutefois, le circuit restant en phase de restitution d'énergie, le fluide continue à être prélevé dans l'accumulateur et la pression d'alimentation à la sortie de cet accumulateur diminue donc, de sorte que la différence entre la haute et la basse pression se réduit, provoquant une baisse du couple moteur d'assistance hydraulique.

A la phase 4, la pression à la sortie de l'accumulateur a atteint son seuil Pmini (le volume de fluide dans l'accumulateur a atteint son niveau bas) et le couple moteur d'assistance hydraulique a suffisamment diminué pour que l'assistance hydraulique puisse cesser sans créer d'à-coup. A cet égard, une très légère augmentation de la basse pression peut être envisagée au moment où l'assistance hydraulique cesse.

Les figures 4A, 4B et 4C illustrent, à titre d'exemple, les évolutions des mêmes grandeurs pendant une phase de récupération d'énergie, cette fois en fonction du volume cumulé Ve du fluide entré dans l'accumulateur 20, le couple CM de sortie du moteur étant alors un couple de freinage.

Comme le montre la figure 4A, la pression dans l'accumulateur (courbe Ca) est égale à son seuil Pmini au stade 1 qui est l'instant du démarrage de la récupération d'énergie, après une phase de restitution d'énergie ayant complètement déchargé l'accumulateur qui a donc atteint son volume minimum. A ce stade, le limiteur de pression 52 est réglé pour que la pression à la sortie de la source de fluide à basse pression soit égale ou légèrement inférieure à Pmini, de sorte que le couple de freinage du moteur hydraulique est nul ou faible pour éviter un à-coup de freinage.

Au début de la phase de récupération d'énergie, la basse pression réglée par le limiteur de pression 52 baisse rapidement jusqu'au stade 2 (courbe Cb) pour permettre une augmentation rapide du couple de freinage. Le niveau bas de pression atteint au stade 2 est le niveau nécessaire au gavage du moteur sans cavitation, en tenant compte de la vitesse de rotation de ce moteur à ce moment, imposée par la propulsion du véhicule. Ce niveau bas est calculé par l'ECU en fonction de la vitesse du moteur.

Entre les stades 2 et 3, le véhicule ralentit, de sorte que la vitesse du moteur hydraulique diminue. La basse pression de gavage est réglée par le limiteur de pression, au niveau juste suffisant pour continuer à éviter la cavitation. Dans la mesure où l'accumulateur 20 est en cours de recharge, la haute pression de la courbe Ca augmente plus rapidement que la basse pression de la courbe Cb, de sorte que le couple de freinage hydrostatique augmente.

Au stade 3, le niveau de freinage souhaité est atteint et on cherche donc à stabiliser le couple de freinage hydrostatique à la valeur de couple demandée Cd. Pour cela, entre les stades 3 et 4, on augmente plus rapidement la basse pression délivrée par la source de fluide à basse pression (cette augmentation devenant au moins sensiblement égale à celle de la pression dans l'accumulateur 20) et le couple de freinage hydrostatique stagne au niveau requis.

Au stade 4, le niveau maximum de pression est atteint dans l'accumulateur 20 (Pmaxi) et la récupération d'énergie peut cesser

## Revendications

1. Circuit hydraulique de récupération d'énergie, comprenant au moins un moteur hydraulique (10), deux conduits principaux (12, 14) pour l'alimentation ou l'échappement dudit au moins un moteur, une source de fluide à basse pression (16, 52, R) et un accumulateur haute pression (20) formant source de fluide à haute pression, le circuit étant apte à fonctionner selon un mode de récupération d'énergie dans lequel le conduit principal d'alimentation (12) est relié à la source de fluide à basse pression (16, 52, R) et le conduit principal d'échappement (14) est relié à l'accumulateur haute pression (20), et selon un mode de restitution d'énergie dans lequel le conduit principal d'alimentation (12) est relié à l'accumulateur haute pression (20) et le conduit principal d'échappement (14) est relié à la source de fluide à basse pression (16, 52, R), dans lequel la source de fluide à basse pression comprend une pompe de gavage haut débit (16) apte à délivrer, à partir d'un réservoir sans surpression (R), un débit de fluide suffisant pour assurer l'alimentation en fluide dudit au moins un moteur hydraulique (10) alors que celui-ci est à vitesse maximale dans le mode de récupération d'énergie,
**caractérisé en ce que** la source de fluide à basse pression comprend en outre un limiteur de pression réglable (52) apte à être commandé pour faire varier la pression du fluide à la source de fluide à basse pression.

2. Circuit selon la revendication 1, **caractérisé en ce qu'**il comprend des moyens (18) pour activer ou désactiver la pompe de gavage haut débit (16).

3. Circuit selon la revendication 1 ou 2, **caractérisé en ce qu'**il comprend des moyens (N, ECU) pour détecter au moins un paramètre révélateur de l'état du circuit et pour commander le limiteur de pression réglable (52) en fonction dudit au moins un paramètre.

4. Circuit selon la revendication 3, **caractérisé en ce que** ledit au moins un paramètre révélateur comprend le niveau de charge de l'accumulateur haute pression (20).

5. Circuit selon l'une quelconque des revendications 1 à 4, **caractérisé en ce qu'**il comprend des moyens (ECU) pour commander le limiteur de pression réglable (52) en fonction d'une consigne de fonctionnement dudit au moins un moteur hydraulique (10).

6. Circuit selon la revendication 5, **caractérisé en ce que** la consigne de fonctionnement se rapporte au couple de sortie dudit au moins un moteur (10).

7. Circuit selon l'une quelconque des revendications 1 à 6, **caractérisé en ce que** le limiteur de pression réglable (52) est à commande électrique.

8. Circuit selon la revendication 7, **caractérisé en ce qu'**il comprend une unité de commande électronique (ECU) apte à commander le limiteur de pression réglable (52) pour, en mode de récupération d'énergie, régler la pression de sortie de la source de fluide à basse pression (16, 52, R) à un niveau nécessaire pour alimenter ledit au moins un moteur hydraulique (10) sans cavitation et pour, en mode de restitution d'énergie, régler ladite basse pression à un niveau minimum.

9. Circuit selon les revendications 3 et 8, et l'une quelconque des revendications 1 à 8, **caractérisé en ce qu'**il comprend des moyens (N, LN) pour transmettre à l'unité de commande électronique (ECU) une information relative au paramètre révélateur de l'état du circuit et **en ce que** ladite unité est apte à déterminer la commande du limiteur de pression réglable (52) en fonction de ladite information.

10. Circuit selon les revendications 5 et 8, et l'une quelconque des revendications 1 à 9, **caractérisé en ce que** l'unité de commande électronique (ECU) est apte à déterminer ladite consigne de fonctionnement en fonction de conditions de circulation d'un véhicule équipé du circuit et à déterminer la commande du limiteur de pression réglable (52) en fonction de ladite consigne.

## Claims

1. A hydraulic circuit for recovering energy, which circuit comprises at least one hydraulic motor (10), two main ducts (12, 14) for feeding or discharging said at least one motor, a low-pressure fluid source (16, 52, R), and a high-pressure accumulator (20) forming a high-pressure fluid source, the circuit being suitable for operating in energy recovery mode in which the feed main duct (12) is connected to the low-pressure fluid source (16, 52, R) and the discharge main duct (14) is connected to the high-pressure accumulator (20), and in energy delivery mode in which the feed main duct (12) is connected to the high-pressure accumulator (20) and the discharge main duct (14) is connected to the low-pressure fluid source (16, 52, R), in which circuit the low-pressure fluid source comprises a high-flow-rate booster pump (16) suitable for delivering, from a pressure-free reservoir (R), a flow-rate of fluid that is sufficient to feed fluid to said at least one hydraulic motor (10) while said motor is at maximum speed in energy recovery mode;
**characterized in that** the low-pressure fluid source further comprises an adjustable pressure limiter (52) suitable for being controlled so as to cause the pressure of the fluid at the low-pressure fluid source to vary.

2. A circuit according to claim 1, **characterized in that** it further comprises means (18) for activating or deactivating the high-flow-rate booster pump (16).

3. A circuit according to claim 1 or 2, **characterized in that** it further comprises means (N, ECU) for detecting at least one indicator parameter that indicates the state of the circuit, and for controlling the adjustable pressure limiter (52) as a function of said at least one parameter.

4. A circuit according to claim 3, **characterized in that** said at least one indicator parameter comprises the level of charge of the high-pressure accumulator (20).

5. A circuit according to any one of claims 1 to 4, **characterized in that** it further comprises means (ECU) for controlling the adjustable pressure limiter (52) as a function of an operating setpoint for operation of said at least one hydraulic motor (10).

6. A circuit according to claim 5, **characterized in that** the operating setpoint relates to the outlet torque of said at least one motor (10).

7. A circuit according to any one of claims 1 to 6, **characterized in that** the adjustable pressure limiter (52) is electrically controlled.

8. A circuit according to claim 7, **characterized in that** it further comprises an electronic control unit (ECU) suitable for controlling the adjustable pressure limiter (52) for acting, in energy recovery mode, to set the outlet pressure of the low-pressure fluid source (16, 52, R) to a level necessary for feeding said at least one hydraulic motor (10) without cavitation, and for acting, in energy delivery mode, to set said low pressure to a minimum level.

9. A circuit according to claims 3 and 8, and to any one of claims 1 to 8, **characterized in that** it further comprises means (N, LN) for transmitting to the electronic control unit (ECU) information relating to the indicator parameter that indicates the state of the circuit, and **in that** said unit is suitable for determining control of the adjustable pressure limiter (52) as a function of said information.

10. A circuit according to claims 5 and 8, and to any one of claims 1 to 9, **characterized in that** the electronic control unit (ECU) is suitable for determining said operating setpoint as a function of operating conditions of a vehicle fitted with the circuit, and for determining control of the adjustable pressure limiter (52) as a function of said setpoint.

## Patentansprüche

1. Hydraulikkreislauf zur Energierückgewinnung, der mindestens einen Hydromotor (10), zwei Hauptleitungen (12, 14) zum Versorgen oder Auslassen des mindestens einen Motors, eine Niederdruckfluidquelle (16, 52, R) und einen Hochdruckspeicher (20), der eine Hochdruckfluidquelle bildet, aufweist, wobei der Kreislauf gemäß einem Energierückgewinnungsmodus funktionieren kann, bei dem die Hauptversorgungsleitung (12) mit der Niederdruckfluidquelle (16, 52, R) und die Hauptauslassleitung (14) mit dem Hochdruckspeicher (20) verbunden ist, und gemäß einem Energierückgabemodus, bei dem die Hauptversorgungsleitung (12) mit dem Hochdruckspeicher (20) und die Hauptauslassleitung (14) mit der Niederdruckfluidquelle (16, 52, R) verbunden ist, bei dem die Niederdruckfluidquelle eine Aufladepumpe (16) mit hohem Durchfluß aufweist, die ausgehend von einem Behälter ohne Überdruck (R) einen Fluiddurchfluß liefern kann, der ausreicht, um die Fluidversorgung des mindestens einen Hydromotors (10) sicherzustellen, während dieser die maximale Geschwindigkeit in dem Energierückgewinnungsmodus aufweist,
**dadurch gekennzeichnet, daß** die Niederdruckfluidquelle ferner einen einstellbaren Druckbegrenzer (52) aufweist, der gesteuert werden kann, um den Druck des Fluids an der Niederdruckfluidquelle zu variieren.

2. Kreislauf nach Anspruch 1, **dadurch gekennzeichnet, daß** er Mittel (18) zum Aktivieren oder Deaktivieren der Aufladepumpe (16) mit hohem Durchfluß aufweist.

3. Kreislauf nach Anspruch 1 oder 2, **dadurch gekennzeichnet, daß** er Mittel (N, ECU) zum Erfassen mindestens eines Parameters aufweist, der den Zustand des Kreislaufs offenbart, und um den einstellbaren Druckbegrenzer (52) in Abhängigkeit von dem mindestens einen Parameter zu steuern.

4. Kreislauf nach Anspruch 3, **dadurch gekennzeichnet, daß** der mindestens eine offenbarende Parameter den Ladezustand des Hochdruckspeichers (20) umfaßt.

5. Kreislauf nach einem der Ansprüche 1 bis 4, **dadurch gekennzeichnet, daß** er Mittel (ECU) zum Steuern des einstellbaren Druckbegrenzers (52) in Abhängigkeit von einem Betriebssollwert des mindestens einen Hydromotors (10) aufweist.

6. Kreislauf nach Anspruch 5, **dadurch gekennzeichnet, daß** sich der Betriebssollwert auf das Ausgangsmoment des mindestens einen Motors (10) bezieht.

7. Kreislauf nach einem der Ansprüche 1 bis 6, **dadurch gekennzeichnet, daß** der einstellbare Druckregler (52) elektrisch gesteuert ist.

8. Kreislauf nach Anspruch 7, **dadurch gekennzeichnet, daß** er eine elektronische Steuereinheit (ECU) aufweist, die den einstellbaren Druckbegrenzer (52) steuern kann, um im Energierückgewinnungsmodus den Ausgangsdruck der Niederdruckfluidquelle (16, 52, R) auf ein Niveau einzustellen, das erforderlich ist, um den mindestens einen Hydromotor (10) ohne Hohlsog zu speisen, und um im Energierückgabemodus den Niederdruck auf ein Minimum einzustellen.

9. Kreislauf nach den Ansprüchen 3 und 8 und einem der Ansprüche 1 bis 8, **dadurch gekennzeichnet, daß** er Mittel (N, LN) zum Übertragen einer Information in Zusammenhang mit dem den Zustand des Kreislaufs offenbarenden Parameter an die elektronische Steuereinheit (ECU) aufweist und daß die Einheit die Steuerung des einstellbaren Druckbegrenzers (52) in Abhängigkeit von der Information bestimmen kann.

10. Kreislauf nach den Ansprüchen 5 und 8 und einem der Ansprüche 1 bis 9, **dadurch gekennzeichnet, daß** die elektronische Steuereinheit (ECU) den Betriebsollwert in Abhängigkeit von Verkehrsbedingungen eines Fahrzeugs, das mit dem Kreislauf ausgestattet ist, bestimmen kann und die Steuerung des einstellbaren Druckbegrenzers (52) in Abhängigkeit von dem Sollwert bestimmen kann.
